# EUROPEAN PATENT APPLICATION

(11) **EP 0 777 344 A2**
(43) Date of publication of application: **04.06.1997**
(21) Application number: 96850171.8
(22) Date of filing: 16.10.1996
(51) Int. Cl.: H04B 7/26

(54) **Method and device to synchronize DECT networks**

(30) Priority: 29.11.1995 SE 9504269
(71) Applicant: TELIA AB, 123 86 Farsta (SE)
(72) Inventor: Björk, Christer, 238 43 Oxie (SE)
(74) Representative: Karlsson, Berne

(57) **Abstract**

The present invention relates to a device and a method which allows synchronization of signals when two or more DECT networks overlap each other. This is achieved by that information about how "old" a DECT network is, is transmitted periodically to inform overlapping DECT networks, if any, about the age of the DECT network, measured in for instance seconds. If two or more networks overlap each other, the synchronization is made according to the principle that the oldest network is given preference, i.e. preserves its phase. Other networks resynchronize to the oldest network and adjust their counters to show the same "age" as the network to which synchronization has been made.

## Description

### TECHNICAL FIELD

The present invention relates to a method and a device at a digital telecommunication system which makes possible synchronization of different overlapping DECT networks by means of utilization of periodically transmitted information.

### PRIOR ART

For DECT there has been a frequency band between 1880 and 1900 MHz reserved. In this frequency band there are 10 carrier frequencies separated by 1,728 MHz. DECT is based on TDMA where it within each carrier frequency are 12 time slots defined in each transmission direction.

In DECT so called dynamic channel allocation is used. The dynamic channel allocation functions in such a way that all 120 logical duplex channels are accessible at all base stations. The selection of logical duplex channel is made by that the portable in question scans all channels and selects the channel which has least interference or noise. In a corresponding way the base station which is received strongest will be called. The latter the portable can decide by that all base stations transmit on at least one channel, irrespective of whether they have a call going on or not. The advantage of this type of channel allocation is that the utilization of frequency spectra is optimized. Another advantage is that no frequency planning need to be done, neither when a system is installed nor when it is extended with new base stations.

Another quality of the dynamic channel allocation is that if a selected time slot and/or carrier frequency is interfered with, the system can automatically exchange the time slot in question respective carrier frequency for another one which is less disturbed. In that way the supervision quality of the communication is maintained.

As has been mentioned above all base stations transmit on at least one channel, irrespective of if they have a call going on or not. The aim with this so called beacon-transmission is to make possible for portables to synchronize with the base station and to read access rights and other service related information.

A big problem with existing DECT networks, however, is that today there is no possibility to synchronize overlapping DECT networks with each other. This results in that such overlapping networks with greatest probability will be out of phase with each other. This consequently implies that a time slot which is taken up by a system will block two time slots in a surrounding system. When the load is low, this will not be noticed since there yet will be time slots accessible for surrounding systems. When the load however increases, the problem will be serious, since up to 50% of the capacity of DECT in the worst case cannot be used within the area where overlapping occurs.

At a preliminary examination which was performed to find out whether the previous technology solves above described problems, the following documents were found.

The document EP-A1-592 209 relates to a method for synchronization between base stations in a mobile radio communication system. Synchronization between the stations are obtained by that the stations periodically transmit a control signal. The control signal contains information about whether the base station in question is synchronized with other stations or not. New (not yet synchronized) base stations listen for said control signals and synchronize towards the base station which is synchronized with other stations. When the new station is synchronized, the control signal is changed from not synchronized to synchronized.

WO A1 94/18764 relates to a digital TDD-system (Time Division Duplex) consisting of a number of base units and portable units. In order to reduce the interference in the system, the base units have possibility to synchronize the communication. The synchronization is achieved by that a base unit is appointed master, at which this transmits a signal which other base units can utilize, to synchronize towards the master. According to patent claim 10 (see also page 7, lines 20-32) a certain base unit can, if the system is thin, be appointed "secondary master unit" to spread the synchronization in the whole system. This process can be repeated to include a multiple of units.

The document US-A-5 285 483 describes a method and a device to synchronize TDD-systems. The system consists of telepoints and base units with partly overlapping coverage areas. The method implies that synchronization information is transmitted from a master-station, at which the in the system included units synchronize their traffic towards this to reduce the interference.

The document EP-A1-626 796 relates to a cordless communication system consisting of a multiple of cells (base stations). The invention relates to a method to synchronize the base stations with each other. The synchronization is made in such a way that a base station transmits synchronization information to which a neighbouring station can synchronize. These stations establish a master/slave-relation and continue to synchronize with other base stations in the system. The in this way established synchronization is maintained by means of communication lines. The cordless synchronization is also possible between different cordless systems (see patent claim 9, and paragraph 2, lines 15-25).

The document US-A-5 410 588 describes a radio communication system consisting of base stations (cells). The system also includes supervision stations which transmit reference signals which in their turn are utilized by surrounding base stations in order to synchronize these with each other. The coverage area from different supervision stations can overlap each other.

These documents, however, do not explicitly describe any implementation of synchronized overlapping DECT networks, and the for DECT specific problems which arise at this implementation are not solved.

### SUMMARY OF THE INVENTION

The aim with the present invention consequently is to solve the above described synchronization problem in DECT. This aim is achieved by a method and a device according to the present invention which is indicated in the characterizing part of the patent claims 1 respective 10.

By utilizing this method and device according to the patent claims 1 and 10 to synchronize overlapping DECT networks there is at the same time achieved a considerable increase of capacity due to the fact that the DECT networks no longer interfere with each other.

By further getting synchronized DECT networks which carries different types of communication, for instance speech respective data communication, are also achieved conditions for possibility to give priority to speech communication before data communication, if this is desirable.

Further characteristics of the present invention will be indicated in the independent patent claims.

### DETAILED DESCRIPTION OF AN EMBODIMENT OF THE INVENTION

The invention is based on the idea that information regarding how old a DECT network is, is transmitted periodically to inform overlapping DECT networks, if any, about the age of the DECT network.

Each DECT network includes at least one counter each which keeps count of the age of respective DECT network. A big numerical value of the counter corresponds to a high age of the corresponding DECT network and vice versa. It is the duty of each base station (fixed part), in respective DECT network, to maintain and step this counter. Stepping is made by one increment at a time after a predefined period of time. This period of time can be decided just as one wants depending on system conditions; a suitable value of this period is however one second.

If two or more DECT networks overlap each other, synchronization is made according to the principle that the oldest DECT network wins; i.e. preserves its present phase. The other DECT networks resynchronize to the oldest DECT network and adjust their counters to show the same age/numerical value as the DECT network to which synchronization was made. If a new DECT network is switched on which overlaps an already existing DECT network, synchronization is made to the existing DECT network and the counter is adjusted to current numerical value. When a first not overlapping network is initiated the counter is set to zero.

The beacon-transmission which each base station must provide in DECT is transmitted by using a service in the DECT-specification which is called Continuous Broadcast Service. Continuous Broadcast Service is a simplex-service which utilizes the so called A-field in a DECT-packet as carrier of data. Since the service only utilizes the A-field in a DECT-packet, the beacon-transmission can be allowed to get a free ride on other types of messages.

In the coding of the A-field in a DECT-packet, there are in the DECT-specification signal bits defined for future expansion of the standard. The A-field is divided into a so called header-field and a tail-field. If for instance System Information (QT) is signalled in the header-field, there are a number of bits in the following tail-field defined for future expansion of the standard. This would give 36 data bits in the tail-field which can be used for synchronization purposes.

By using 32 bits out of the 36 available bits to periodically signal how "old" a DECT network is since it was started up, for instance measured in seconds, synchronization of overlapping DECT networks can be made in a way as has been described above.

The suggested implementation of the invention consequently amounts to define these today undefined databits in the tail-field to contain information about the age, i.e. the numerical value in the counter, of a DECT network. It should be noticed that this information is only used to solve a conflict between two overlapping DECT networks. The synchronization itself between two overlapping DECT networks is made in the same way as when a portable synchronizes to the fixed side in the DECT network, but with the difference that the portable in this case consists of the DECT network which is of youngest age (lowest numerical value).

Because synchronization of overlapping DECT networks need not be done at lightning speed (today there is no synchronization at all) it is sufficient that information about the age of a DECT network is transmitted very seldom, for instance every minute. For this reason the transmission of age information does not influence the transmission of other system information in a DECT network.

What has been described above is only to be regarded as an embodiment of the present invention, and the protection scope of the invention is only restricted by what is indicated in the enclosed patent claims.

## Claims

1. Method to synchronize overlapping DECT networks,
**characterized** in that when two or more of said DECT networks overlap each other, a synchronization is made to the in time oldest DECT network.

2. Method according to patent claim 1,
**characterized** in that said overlapping DECT networks resynchronize to the in time oldest DECT network and gets the same phase as this DECT network.

3. Method according to patent claim 2,
**characterized** in that said DECT networks each includes a counter which at synchronization is adjusted to show the same age/numerical value as the DECT network to which synchronization was made.

4. Method according to patent claim 3,
**characterized** in that if a new DECT network is switched on which overlaps an already existing DECT network, a synchronization is automatically made to the existing DECT network, and the counter is adjusted to current numerical value/age according to the counter in the existing DECT network.

5. Method according to the patent claims 3 or 4,
**characterized** in that at initiation of a first not overlapping DECT network its counter is adjusted to the numerical value zero.

6. Method according to the patent claims 3-5,
**characterized** in that said counter is periodically stepped by one increment after a predefined period of time, preferably one second.

7. Method according to any of the patent claims 3-6,
**characterized** in that information about how old a DECT network is, is transmitted periodically to inform overlapping DECT networks, if any, about its age, at which the age is defined as the numerical value of the counter, where a big value is equivalent to high age, and a small value is equivalent to low age.

8. Method according to patent claim 7,
**characterized** in that the information regarding the age of a DECT network is transmitted by means of a service in the DECT-specification which is called Continuous Broadcast Service.

9. Method according to patent claim 8,
**characterized** in that a new system message is defined in DECT by a number of undefined databits in an A-field in DECT being utilized, which system message is defined to include said information regarding the age of a DECT network.

10. Device to, in a DECT network, periodically transmit information which makes it possible to synchronize overlapping DECT networks with each other **characterized** in that said information includes the age of the network, at which the in time oldest DECT network preserves it phase, and younger DECT networks resynchronize and adapt the age and phase of the oldest DECT network.

11. Device according to patent claim 10,
**characterized** in that said information regarding the age of a DECT network is equivalent to a numerical value of a counter, at which the device steps said counter with one increment at a time after a given period of time, preferably one second, and if said numerical value of the counter is big, the corresponding DECT network has a high age, and if said numerical value of the counter is small, the corresponding DECT network has a low age.

12. Device according to patent claim 11,
**characterized** in that a base station (FP, fixed part) in said DECT network attends to stepping of the counter.

13. Device according to patent claim 12,
**characterized** in that said base station in said DECT network transmits said information by means of a service in the DECT-specification called Continuous Broadcast Service which utilizes an A-field in a DECT-packet as carrier of said information.

14. Device according to patent claim 13,
**characterized** in that said base station utilizes a Tail-field in said A-field which includes 36 databits for transmission of said information.

15. Device according to patent claim 14,
**characterized** in that it utilizes 32 databits in said Tail-field for transmission of said information.
